# FASCICULE DE BREVET EUROPEEN

(11) **EP 4 169 155 B1**
(45) Date de publication et mention de la délivrance du brevet: **27.03.2024**
(21) Numéro de dépôt: 21732071.2
(22) Date de dépôt: 15.06.2021
(51) Int. Cl.: H02N 11/00, H02N 10/00

(54) **MACHINE DE CONVERSION D'ENERGIE THERMIQUE EN ENERGIE ELECTRIQUE OU INVERSEMENT**
MASCHINE ZUR UMWANDLUNG VON WÄRMEENERGIE IN ELEKTRISCHE ENERGIE ODER UMGEKEHRT
MACHINE FOR CONVERTING THERMAL ENERGY INTO ELECTRICAL ENERGY OR VICE VERSA

(30) Priorité: 17.06.2020 FR 2006322
(43) Date de publication de la demande: 26.04.2023
(73) Titulaire: magnoric, 67120 Duppigheim (FR)
(72) Inventeur: MULLER, Christian, 67000 Strasbourg (FR); RISSER, Michel, 67280 Oberhaslach (FR)
(74) Mandataire: Cabinet Laurent & Charras
(86) Numéro de dépôt international: PCT/EP2021/066140
(87) Numéro de publication internationale: WO 2021/255040

(56) Documents cités:
- US-A1- 2015 295 469

## Description

### Domaine technique :

La présente invention concerne une machine de conversion d'énergie thermique en énergie électrique ou inversement d'énergie électrique en énergie thermique, ladite machine de conversion comportant au moins un convertisseur magnétothermique agencé pour convertir des variations de température en énergie mécanique ou des variations de champ magnétique en énergie thermique.

L'invention s'intéresse particulièrement à la conversion des chaleurs, dont les chaleurs fatales, en énergie électrique. On appelle « chaleurs » toutes les sources thermiques qui sont chaudes, c'est-à-dire dont la température est supérieure au zéro absolu (> 0 Kelvin). L'invention s'intéresse plus particulièrement aux chaleurs dont la température est comprise entre -100°C et +100°C.

L'invention s'intéresse également à la production d'énergie thermique à partir d'énergie mécanique ou électrique, en utilisant la technologie développée pour la conversion des chaleurs fatales. L'invention concerne donc une machine de conversion réversible, c'est-à-dire pouvant fonctionner selon deux modes opératoires inverses.

### Technique antérieure :

La chaleur fatale, aussi appelée chaleur de récupération, ou chaleur perdue, correspond à une énergie thermique générée par un procédé dont ce n'est pas la finalité première, et dans lequel la chaleur produite n'est pas récupérée et est rejetée dans l'atmosphère ou dans tout autre milieu. Selon une étude de l'ADEME (Agence de la Transition Écologique) effectuée en septembre 2017, l'industrie française présente un potentiel de chaleur fatale de 109,5 TWh (térawattheures), soit 36 % de sa consommation de combustibles, dont 56,6 TWh sont perdus à moins de 100°C. À ce gisement s'ajoute 8,4 TWh de chaleur rejetée au niveau des stations d'épuration des eaux usées, des usines d'incinération des ordures ménagères, des Datacenter, des hôpitaux, et autres sites tertiaires.

Dans l'industrie, on peut citer à titre d'exemple un procédé de combustion d'un combustible dans un four dont la chaleur utile n'est que de 20% à 40%. Les 60% à 80% restants de la chaleur produite par ce four constituent par conséquent de la chaleur perdue si elle n'est pas récupérée. Cet exemple s'étend à toute autre source thermique issue des centrales thermiques, des centrales nucléaires, des cimenteries, des centrales solaires thermiques, des procédés de liquéfaction des gaz, cette liste n'étant pas exhaustive.

En fonction des procédés industriels, la chaleur fatale peut prendre plusieurs formes : rejets gazeux (ex : fumées de fours), rejets liquides (ex : chaudières), ou rejets diffus (ex : fuites d'isolation dans un système thermique). Les températures des chaleurs fatales s'étendent sur une très large plage telle que de -100°C à plus de +500 °C.

Pour les chaleurs fatales dont la température est supérieure à 150°C, il existe de nombreuses technologies de génération d'électricité par conversion de chaleur (cycle de Rankine, conversion thermoélectrique inversée basée sur l'effet Seebeck, sels fondus, etc.). Ces technologies sont particulièrement coûteuses et complexes, et ne sont pas rentables, ni assez performantes pour valoriser les chaleurs fatales dont la température est inférieure à 100 °C, appelées également «rejets thermiques à bas niveau de température ».

Pour les rejets thermiques à bas niveau de température, les technologies existantes ne proposent qu'un taux de conversion faible et inférieur à 30% en comparaison avec le rendement du cycle de Carnot. Les publications US 2015/0295469 A1 et US 9,998,036 B2 proposent une technologie basée sur la transition de phase magnétique de certains matériaux métalliques, mais limitée à l'exploitation des chaleurs fatales sous forme de rejets liquides. Le document US 2015/295469 A1 divulgue notamment une machine de conversion d'énergie thermique en énergie électrique, ladite machine comportant au moins un rotor, un échangeur thermique et un convertisseur magnétothermique. Ce convertisseur magnétothermique comporte des éléments actifs à transition de phase magnétique ou thermique, et une unité de modulation thermique agencée pour soumettre lesdits éléments actifs à une variation de température ayant pour effet de faire varier respectivement l'état magnétique desdits éléments actifs.

Cette technologie est complexe à mettre en oeuvre, encombrante, très peu efficace et par conséquent limitée dans ses applications. En effet, elle nécessite une forte consommation de rejets liquides pour un taux de conversion inférieur à 20% en comparaison avec le rendement du cycle de Carnot. A ce jour, elle n'est pas exploitée industriellement.

Face aux enjeux de la transition énergétique, la récupération et la valorisation de la chaleur fatale issue de tout secteur (industriel, tertiaire, résidentiel) constituent un potentiel d'économies d'énergie important et par voie de conséquence une baisse significative de l'impact sur le réchauffement climatique en réduisant drastiquement l'émission des rejets thermiques dans l'atmosphère. En outre, la chaleur fatale constitue un gisement d'énergie thermique largement disponible dans le monde entier. En outre, il n'existe pas à ce jour de technologie basée sur la transition de phase magnétique de certains matériaux métalliques, qui soit réversible et qui soit capable de produire aussi bien de l'énergie électrique à partir d'énergie thermique dans un premier mode de fonctionnement, que de l'énergie thermique à partir d'énergie électrique dans un second mode de fonctionnement, notamment pour des applications de climatisation, réfrigération, chauffage, tempérage, séchage ou similaire.

### Présentation de l'invention :

La présente invention vise à pallier ces inconvénients en proposant une machine de conversion réversible, industrialisable, compacte, fiable et sûre dans le respect des normes en matière de champ magnétique et de pression, mettant en oeuvre un mécanisme peu contraint donc offrant une longue durée de vie avec peu d'entretien, exploitant une technologie basée sur la transition de phase magnétique de certains matériaux, offrant un taux de conversion élevé supérieur à 60% en comparaison avec le rendement du cycle de Carnot, sans aucun impact négatif sur l'environnement ni sur le paysage, pouvant exploiter des gisements d'énergie thermique sous différentes formes pour produire de l'énergie électrique verte et renouvelable, mais également de produire du froid magnétique, au moyen d'une technologie modulaire, réversible, facilement configurable en fonction des puissances visées et des températures des gisements d'énergie ou des températures de réfrigération et/ou de chauffage à atteindre.

Dans ce but, l'invention concerne une machine de conversion telle que définie dans la revendication 1.

La conception compacte du convertisseur magnétothermique, dans laquelle la disposition alternée des éléments actifs du premier groupe et des éléments actifs du second groupe répartis dans le stator correspond à la disposition alternée des pôles magnétiques et non magnétiques du rotor, permet d'exploiter au maximum tous les éléments actifs et les pôles du rotor et d'améliorer considérablement les performances et le rendement thermique du convertisseur magnétothermique.

Dans une première forme de réalisation, ledit convertisseur magnétothermique peut comporter une carcasse magnétique fixe superposée audit rotor pour délimiter entre eux un entrefer dans lequel est disposé ledit stator, ladite carcasse magnétique étant agencée pour canaliser le flux magnétique et fermer les lignes de champ des pôles magnétiques dudit rotor à travers ledit stator et lesdits éléments actifs.

Dans une seconde forme de réalisation, ledit convertisseur magnétothermique peut comporter deux rotors superposés pour délimiter entre eux un entrefer dans lequel est disposé ledit stator, les deux rotors ayant le même nombre de pôles magnétiques et non magnétiques, et étant agencés pour canaliser le flux magnétique et fermer les lignes de champ des pôles magnétiques des deux rotors à travers ledit stator et lesdits éléments actifs. Dans ce cas, les deux rotors peuvent être couplés entre eux par une liaison mécanique ou par un couplage magnétique.

Dans une forme préférée de l'invention, ledit stator comporte ou forme un support thermiquement isolant, sur lequel sont fixés lesdits éléments actifs, ainsi que des raccords fluidiques pour mettre en communication ledit circuit fluidique avec lesdits éléments actifs. Ledit stator comporte avantageusement un nombre d'éléments actifs qui est un multiple du nombre de pôles magnétiques et non magnétiques dudit au moins un rotor, de sorte qu'un même nombre ou qu'une même quantité d'éléments actifs soit en face de chacun des pôles magnétiques et non magnétiques.

Ledit circuit fluidique peut comporter un fluide caloporteur choisi dans le groupe comportant une solution aqueuse avec ou sans additif, un milieu gazeux, un gaz liquéfié, un produit pétrolier. Il peut également comporter une pompe, deux échangeurs de chaleur et deux boucles de circulation pour ledit fluide caloporteur raccordées en parallèle par un système de synchronisation. Dans ce cas, ledit système de synchronisation est agencé pour raccorder en série lesdits éléments actifs respectivement dudit premier groupe et dudit second groupe avec lesdits échangeurs de chaleur alternativement dans l'une et l'autre desdites boucles de circulation.

Ledit système de synchronisation comporte avantageusement des distributeurs fluidiques commandés selon une fréquence de commutation déterminée par un actionneur choisi parmi les actionneurs mécaniques, hydrauliques, électrique et/ou électroniques. En outre, ils peuvent être commandés par ledit au moins un rotor du convertisseur magnétothermique et une transmission par came mécanique, par un moteur auxiliaire à vitesse variable et une transmission par came mécanique, ou par une came électrique ou électronique programmable.

Ledit circuit fluidique peut comporter en outre un réservoir tampon de fluide caloporteur raccordé en série avec chacune desdites boucles de circulation. De préférence, il comporte également des organes de contrôle du sens de circulation dudit fluide caloporteur agencés pour faire circuler le fluide caloporteur dans chacun desdits échangeurs de chaleur dans un unique sens de circulation.

Lesdits éléments actifs peuvent comporter au moins l'un des matériaux choisis dans le groupe comprenant le gadolinium (Gd), un alliage de gadolinium (Gd), un alliage de fer (Fe), un alliage de manganèse (Mn), un alliage de lanthane (La), lesdits alliages comportant au moins l'un des matériaux choisis dans le groupe comprenant au moins le silicium (Si), le germanium (Ge), le fer (Fe), le magnésium (Mg), le phosphore (P), le manganèse (Mn), l'hydrogène (H), l'arsenic (As), ou une combinaison de certains desdits matériaux. Et ledit matériau peut se présenter sous l'une des formes choisie dans le groupe comprenant une lame, un bloc poreux, un bloc de lames, une pastille, de la poudre, un agglomérat de morceaux.

Dans la forme préférée de l'invention, ledit convertisseur magnétothermique présente une configuration annulaire, ledit stator et ledit au moins un rotor étant superposés radialement et s'étendant axialement. Dans ce cas, au moins une partie des passages fluidiques prévus dans lesdits éléments actifs débouchent axialement, et lesdits raccords fluidiques sont disposés dans au moins une extrémité axiale dudit stator.

Dans cette configuration annulaire, lesdits éléments actifs se présentent avantageusement sous la forme de barreaux, s'étendant axialement dans ledit stator, et peuvent être constitués chacun d'un bloc de matériau poreux ou d'un bloc de lames de matériau superposées et délimitant entre elles lesdits passages fluidiques.

Les pôles magnétiques dudit au moins un rotor peuvent être obtenus par un assemblage magnétique choisi parmi le groupe comprenant un ou des aimants permanents, des ferrites, un électro-aimant, un aimant supraconducteur, un électro-aimant supraconducteur, un supraconducteur, une combinaison de ces solutions, tandis que les pôles non magnétiques dudit au moins un rotor peuvent être obtenus par l'absence d'assemblage magnétique.

En variante de réalisation, au moins un des pôles magnétiques dudit stator ou dudit au moins un rotor peut être décalé par rapport aux autres pôles magnétiques symétriques dudit stator ou dudit au moins un rotor, pour introduire un déséquilibre magnétique permanent entre ledit stator et ledit au moins un rotor.

Ladite machine de conversion peut comporter plusieurs convertisseurs magnétothermiques raccordés en série, en parallèle ou selon une combinaison série-parallèle, pour augmenter la puissance de conversion.

Lorsque ladite machine de conversion est destinée à convertir de l'énergie électrique en énergie thermique, alors elle comporte en outre un actionneur couplé audit au moins un rotor dudit convertisseur magnétothermique pour soumettre lesdits éléments actifs à un champ magnétique variable et créer alternativement dans lesdits éléments actifs un cycle magnétocalorique d'échauffement et un cycle magnétocalorique de refroidissement. Dans ce cas, ledit circuit fluidique est couplé d'une part audit stator pour collecter l'énergie thermique produite par lesdits éléments actifs, et d'autre part à un dispositif externe par l'intermédiaire d'au moins un échangeur de chaleur pour transférer l'énergie thermique produite et simultanément isoler ladite machine de conversion dudit au moins un dispositif externe, ladite unité de modulation magnétique comporte ledit au moins un rotor et un système de synchronisation agencé pour synchroniser la circulation du fluide caloporteur du circuit fluidique dans lesdits éléments actifs avec lesdits cycles magnétocaloriques.

Dans ce mode de fonctionnement, lesdits éléments actifs peuvent avantageusement comporter un assemblage de matériaux magnétocaloriques de températures de Curie différentes, ordonnées selon un ordre croissant ou décroissant.

Lorsque ladite machine de conversion est destinée à convertir de l'énergie thermique en énergie électrique à partir d'une première source thermique à une première température et d'une seconde source thermique à une seconde température différente de la première température, alors elle comporte en outre un convertisseur électromécanique couplé audit au moins un rotor dudit convertisseur magnétothermique pour convertir de l'énergie mécanique en énergie électrique. Dans ce cas, ledit circuit fluidique est couplé d'une part à ladite première source thermique par l'intermédiaire d'un premier échangeur de chaleur et à ladite seconde source thermique par l'intermédiaire d'un second échangeur de chaleur pour collecter l'énergie thermique et simultanément isoler ladite machine de conversion desdites sources thermiques, et est couplé d'autre part audit stator pour transférer l'énergie thermique collectée auxdits éléments actifs, et ladite unité de modulation thermique comporte un système de synchronisation agencé pour soumettre lesdits éléments actifs à des variations de température, générer un déséquilibre magnétique permanent entre ledit au moins un rotor et ledit stator, et engendrer un déplacement dudit au moins un rotor pour créer ladite énergie mécanique.

Dans ce mode de fonctionnement, ledit convertisseur électromécanique est un générateur électrique, le rotor dudit générateur électrique étant couplé audit au moins un rotor dudit convertisseur magnétothermique directement ou par l'intermédiaire d'un réducteur ou d'un multiplicateur de vitesse pour adapter les vitesses desdits rotors.

Dans ce mode de fonctionnement, l'invention concerne également l'utilisation d'une machine de conversion d'énergie thermique en énergie électrique telle que définie cidessus pour récupérer l'énergie thermique issue de chaleurs fatales perdues dans une plage de température de -100°C à +100°C. De préférence, la différence de température entre la première source thermique et la seconde source thermique est au moins égale à 10°C. Et ladite machine de conversion est agencée pour atteindre un taux de conversion supérieur à 60% en comparaison avec le rendement du cycle de Carnot.

### Brève description des figures :

La présente invention et ses avantages apparaîtront mieux dans la description suivante de plusieurs modes de réalisation donnés à titre d'exemples non limitatifs, en référence aux dessins annexés, dans lesquels:
- la figure 1 est un schéma illustrant le principe utilisé dans l'invention basé sur la transition de phase magnétique d'un matériau métallique pour convertir de l'énergie thermique en énergie mécanique qui va pouvoir être transformée en énergie électrique,
- la figure 2 est un schéma de fonctionnement d'une machine de conversion selon l'invention,
- la figure 3 est une vue en plan du convertisseur magnétothermique de la machine de la figure 2,
- la figure 4 est une vue en perspective du rotor du convertisseur magnétothermique de la figure 3,
- la figure 5 représente en perspective une machine de conversion selon l'invention, vue du côté de la commande fluidique,
- la figure 6 représente en perspective la machine de conversion de la figure 5, vue du côté du convertisseur électromécanique,
- la figure 7 est une vue éclatée d'une machine de conversion selon l'invention pourvue de deux étages thermiques, et
- la figure 8 est une vue en plan du convertisseur magnétothermique de la machine de la figure 2, selon une autre forme de réalisation.

### Description détaillée de l'invention :

Dans les exemples de réalisation illustrés, les éléments ou parties identiques portent les mêmes numéros de référence. En outre, les termes qui ont un sens relatif, tels que vertical, horizontal, droite, gauche, avant, arrière, au-dessus, en-dessous, etc. doivent être interprétés dans des conditions normales d'utilisation de l'invention, et telles que représentées sur les figures.

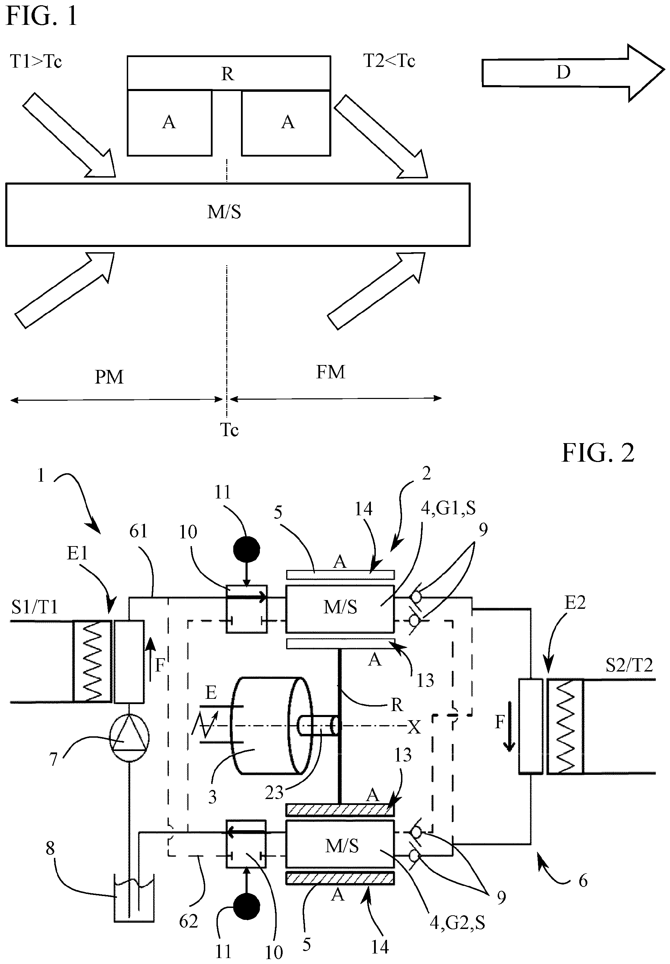

La machine de conversion 1, 100 selon l'invention, permettant de convertir de l'énergie thermique en énergie électrique, exploite une technologie basée sur la transition de phase magnétique de certains matériaux lorsqu'ils sont soumis à une variation de température par rapport à une température de transition Tc. La température de transition Tc est la température de Curie ou point de Curie à laquelle un matériau ferromagnétique (FM) perd son aimantation. Le matériau devient alors paramagnétique (PM). La figure 1 illustre schématiquement le principe utilisé dans l'invention. Le matériau M à transition de phase magnétique est schématisé par un barreau de matériau, appelé par la suite élément actif 4, et porté par ou intégré dans un stator S fixe. Il coopère avec des aimants A, par exemple des aimants permanents, formant les pôles magnétiques 5 d'un rotor R mobile en translation ou en rotation par rapport au stator S. Dans la figure 1, le rotor R se déplace en translation selon la flèche D. Lorsque le matériau M est soumis à une température T1 supérieure à la température de transition Tc (à gauche de la figure 1), il passe d'un état ferromagnétique à un état paramagnétique PM dans lequel il n'a pas d'effet ni sur les deux aimants A, ni sur le rotor R. Puis lorsque le matériau M est soumis à une température T2 inférieure à la température de transition Tc (à droite de la figure 1), il revient à un état ferromagnétique FM dans lequel il favorise le passage d'un flux magnétique entre les deux aimants A, et crée un déséquilibre magnétique avec le rotor R qui se déplace en direction de la flèche D pour retrouver une position d'équilibre magnétique. En répétant ce cycle thermique à une fréquence définie, le rotor R va suivre le matériau M dans son état ferromagnétique en suivant les zones thermiques générées par les variations de température. Le déplacement du rotor R crée alors une énergie mécanique qui va pouvoir être transformée en énergie électrique. Le déplacement du rotor R peut être alternatif si le rotor R est linéaire comme illustré à la figure 1, ou continu si le rotor R est rotatif comme illustré dans les autres figures 2 à 8.

L'énergie mécanique produite dépendra de la nature des matériaux et de leur température de transition Tc, de l'intensité du champ magnétique du rotor R, du nombre de pôles magnétiques 5, de la fréquence de cycles thermiques et de la différence entre les températures T1 et T2.

Les matériaux à transition de phase magnétique peuvent être choisis dans le groupe comprenant au moins le gadolinium (Gd), un alliage de gadolinium (Gd), un alliage de fer (Fe), un alliage de manganèse (Mn), un alliage de lanthane (La), lesdits alliages comportant au moins l'un des matériaux choisis dans le groupe comprenant au moins le silicium (Si), le germanium (Ge), le fer (Fe), le magnésium (Mg), le phosphore (P), le manganèse (Mn), l'hydrogène (H), l'arsenic (As). Les matériaux à transition de phase magnétique peuvent en outre se présenter sous différentes formes telles que celles choisies dans le groupe comportant une lame plane ou non, un bloc poreux, un bloc de lames superposées, une pastille, de la poudre, un agglomérat de morceaux.

Le niveau de la température de transition Tc de ces matériaux permet d'exploiter efficacement des gisements thermiques de bas niveau de température situés par exemple dans une plage de température de -100°C à +100°C. En outre l'écart entre les températures T1 et T2 peut être faible, et au moins égale à 10°C.

La figure 2 illustre schématiquement le fonctionnement d'une machine de conversion 1 selon l'invention comportant un convertisseur magnétothermique 2 agencé pour convertir des variations de température en énergie mécanique, et un convertisseur électromécanique 3 couplé au convertisseur magnétothermique 2 agencé pour convertir l'énergie mécanique en énergie électrique E. Elle comporte en outre une unité de modulation thermique agencée pour collecter de l'énergie thermique à partir d'une première source thermique S1 à une première température T1 et d'une seconde source thermique S2 à une seconde température T2 différente de la première température T1 et pour la transférer au convertisseur magnétothermique 2.

Le convertisseur magnétothermique 2 comporte un stator S fixe pourvu de matériau M à transition de phase magnétique qui constituent des éléments actifs 4, et un rotor R mobile en rotation autour d'un axe X pourvu d'aimants A qui constituent des pôles magnétiques 5. Dans la figure 2 et uniquement aux fins d'explication du fonctionnement de la machine 1, seuls deux éléments actifs 4 et seuls deux pôles magnétiques 5 sont représentés.

L'unité de modulation thermique comporte un circuit fluidique 6 interne au convertisseur magnétothermique 2, fermé et indépendant des sources thermiques. En effet, le circuit fluidique 6 est couplé à la première source thermique S1 par l'intermédiaire d'un premier échangeur de chaleur E1 et à la seconde source thermique S2 par l'intermédiaire d'un second échangeur de chaleur E2 pour collecter l'énergie thermique. Les échangeurs de chaleur E1, E2 ont de fait l'avantage d'isoler le circuit fluidique 6 ainsi que le convertisseur magnétothermique 2 et l'ensemble de la machine de conversion 1 des sources thermiques S1, S2. Les échangeurs de chaleur E1, E2 peuvent être des échangeurs liquide/liquide, gaz/gaz, gaz/liquide ou liquide/gaz, en fonction de la nature des sources thermiques et celle du fluide caloporteur. Ainsi, la machine de conversion 1 fonctionne en circuit fermé, c'est à dire en milieu sec, ce qui lui permet d'exploiter la totalité des sources thermiques S1, S2 disponibles, sans perte ni gaspillage comme c'est notamment le cas dans les solutions de l'état de l'art qui fonctionnent en milieu humide.

Le circuit fluidique 6 est également couplé au stator S pour transférer l'énergie thermique collectée aux éléments actifs 4 qu'il met en série avec les échangeurs de chaleur E1 et E2. A cet effet, le circuit fluidique 6 comporte une pompe 7 agencée pour mettre en circulation un fluide caloporteur au travers des échangeurs de chaleur E1 et E2 et des éléments actifs 4. Le fluide caloporteur peut être constitué de tout fluide capable de transporter de l'énergie thermique d'un point à un autre sans perte, liquide ou gazeux, tel qu'une solution aqueuse avec ou sans additif, un milieu gazeux, un gaz liquéfié, etc. ce fluide étant choisi en fonction des températures de fonctionnement de la machine. La solution aqueuse peut être de l'eau pure ou avec un additif antigel tel que du glycol et/ou anticorrosion tel que la soude et/ou tout autre additif en fonction des conditions de fonctionnement du fluide caloporteur.

Le circuit fluidique 6 comporte deux boucles de circulation 61, 62 du fluide caloporteur raccordées en parallèle par un système de synchronisation agencé pour raccorder en série les éléments actifs 4 avec les échangeurs de chaleur E1, E2 alternativement dans l'une et l'autre boucles de circulation 61, 62 pour créer une alternance de cycles thermiques à une fréquence déterminée, générer un déséquilibre magnétique permanent entre le rotor R et le stator S, et engendrer un déplacement du rotor R.

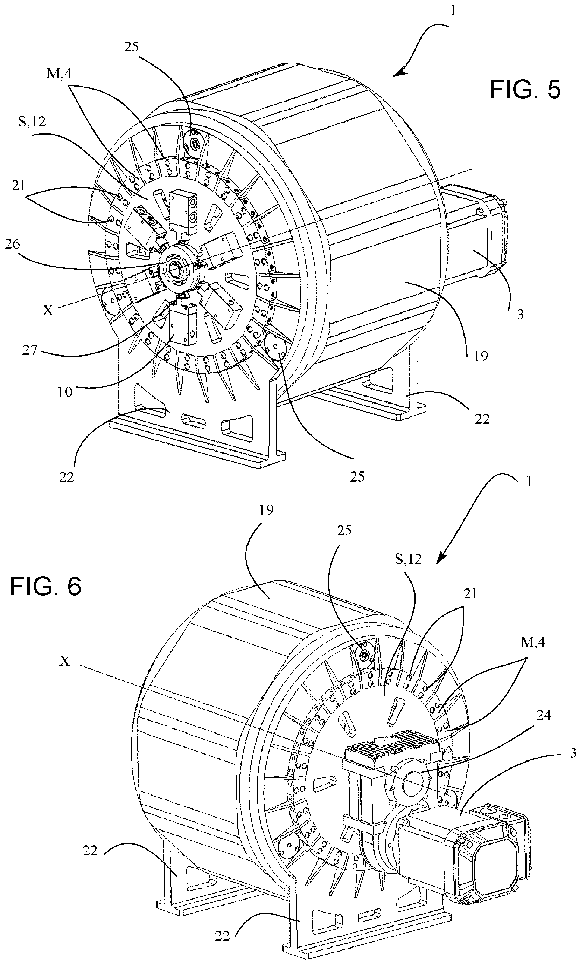

Le système de synchronisation comporte des distributeurs fluidiques 10 commandés selon une fréquence de commutation déterminée par un actionneur 11. Les distributeurs fluidiques 10 peuvent être constitués de vannes à boisseau ou à tiroir, à double voie. L'actionneur 11 peut être choisi parmi les actionneurs mécaniques, hydrauliques, électrique et/ou électroniques. Par exemple, l'actionneur 11 peut être séparé du convertisseur magnétothermique 2 et constitué d'un moteur auxiliaire ou dédié, à vitesse variable, et couplé aux distributeurs fluidiques 10 par une transmission mécanique. Il peut être intégré audit convertisseur et constitué du rotor R du convertisseur magnétothermique 2, couplé aux distributeurs fluidiques 10 par une transmission mécanique. Dans ces deux exemples, la transmission mécaniquement peut être avantageusement une transmission par came 26 (voir figure 5). L'actionneur 11 peut également être constitué une came électrique ou électronique pilotée par une carte électronique programmable. Ces exemples ne sont bien entendu pas limitatifs.

Le circuit fluidique 6 comporte un réservoir tampon 8 de fluide caloporteur raccordé en série avec chacune des boucles de circulation 61, 62. Il comporte en outre des organes de contrôle 9 du sens de circulation du fluide caloporteur dans les boucles de circulation 61, 62 pour imposer un unique sens de circulation du fluide caloporteur dans les échangeurs de chaleur E1, E2, illustré par les flèches F. Les organes de contrôle 9 peuvent être constitués de valves unidirectionnelles, par exemple à bille, n'autorisant le passage de fluide que dans un seul sens de circulation.

En référence à la figure 2, le fonctionnement de la machine de conversion 1 est décrit. Dans un premier cycle thermique, les distributeurs fluidiques 10 sont dans une première position, telle qu'illustrée à la figure 2 et le fluide caloporteur circule dans une première boucle de circulation 61 représentée en trait plein, à partir du réservoir tampon 8, via la pompe 7. Il traverse le premier échangeur de chaleur E1 pour récupérer de l'énergie thermique a une température T1 issue d'une première source de chaleur S1 et supérieure à la température de transition Tc, traverse un élément actif 4 situé en haut de la figure 2, qui passe à un état paramagnétique n'ayant aucun effet sur les aimants A du rotor R (aimants sans hachure), traverse le second échangeur de chaleur E2 pour récupérer de l'énergie thermique a une température T2 issue d'une seconde source de chaleur S2 et inférieure à la température de transition Tc, traverse un élément actif 4 situé en bas de la figure 2, qui passe à un état ferromagnétique favorisant la conduction du flux magnétique entre les aimants A du rotor R (aimants avec hachures) et induisant la rotation du rotor R autour de l'axe X, puis revient dans le réservoir tampon 8.

Dans un second cycle thermique, les distributeurs fluidiques 10 sont dans une seconde position, non illustrée à la figure 2, et le fluide caloporteur circule dans une seconde boucle de circulation 62 représentée en trait interrompu court, à partir du réservoir tampon 8, via la pompe 7, traverse le premier échangeur de chaleur E1 pour récupérer de l'énergie thermique a la température T1 issue de la première source de chaleur S1 et supérieure à la température de transition Tc, traverse l'élément actif 4 situé en bas de la figure 2, qui passe à un état paramagnétique n'ayant aucun effet sur les aimants A du rotor R, traverse le second échangeur de chaleur E2 pour récupérer de l'énergie thermique a la température T2 issue de la seconde source de chaleur S2 et inférieure à la température de transition Tc, traverse l'élément actif 4 situé en haut de la figure 2, qui passe à un état ferromagnétique favorisant la conduction du flux magnétique entre les aimants A du rotor R et induisant la rotation du rotor R autour de l'axe X, puis revient dans le réservoir tampon 8.

Les premiers et seconds cycles thermiques se répètent à une fréquence grâce au système de synchronisation qui commande la commutation des distributeurs fluidiques 10, en créant une alternance de phases paramagnétiques et ferromagnétiques dans les éléments actifs 4, et en générant un couple de rotation sur le rotor R. Le fluide caloporteur circule dans les éléments actifs 4 dans un sens dans la première boucle de circulation 61 et dans le sens contraire dans la seconde boucle de circulation 62, mais circule toujours dans le même sens selon la flèche F dans les échangeurs de chaleur E1, E2.

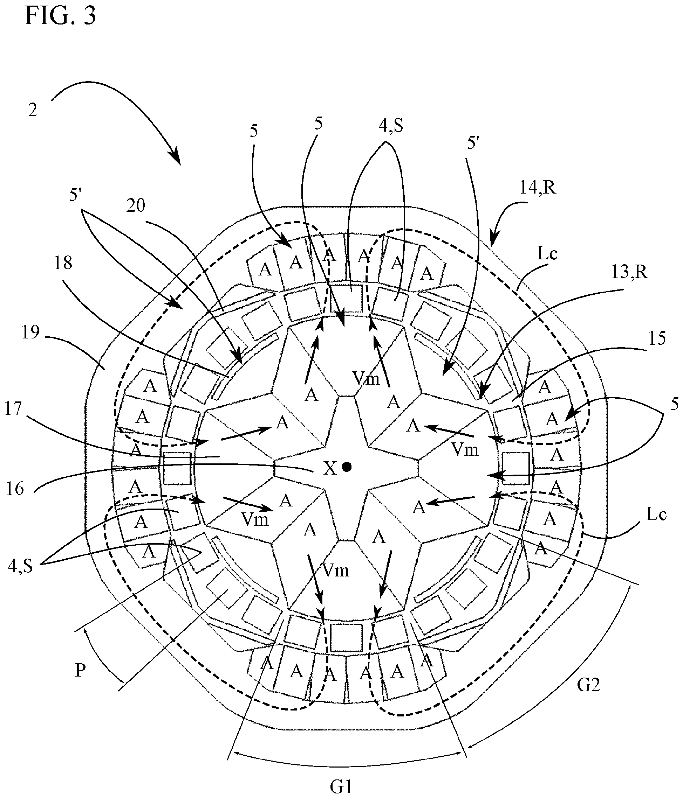

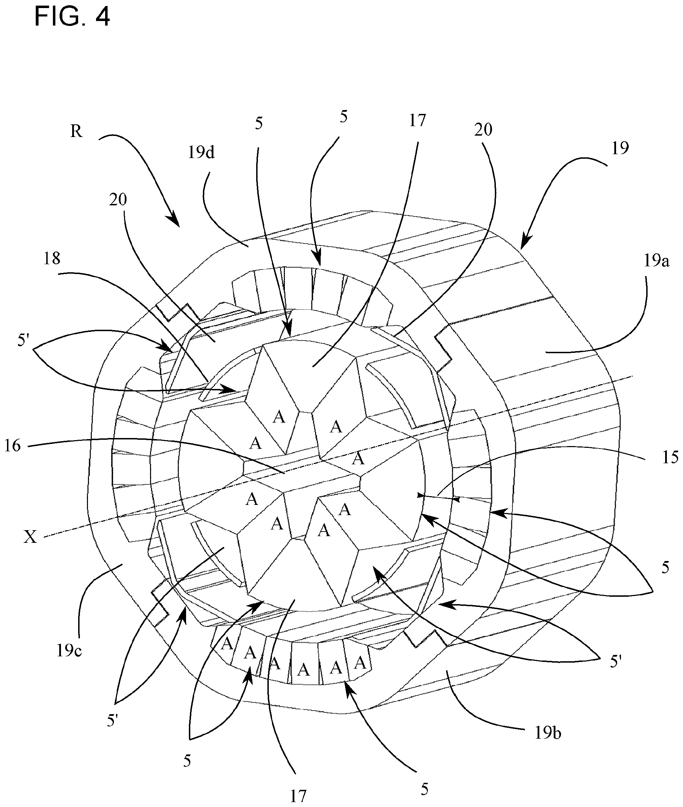

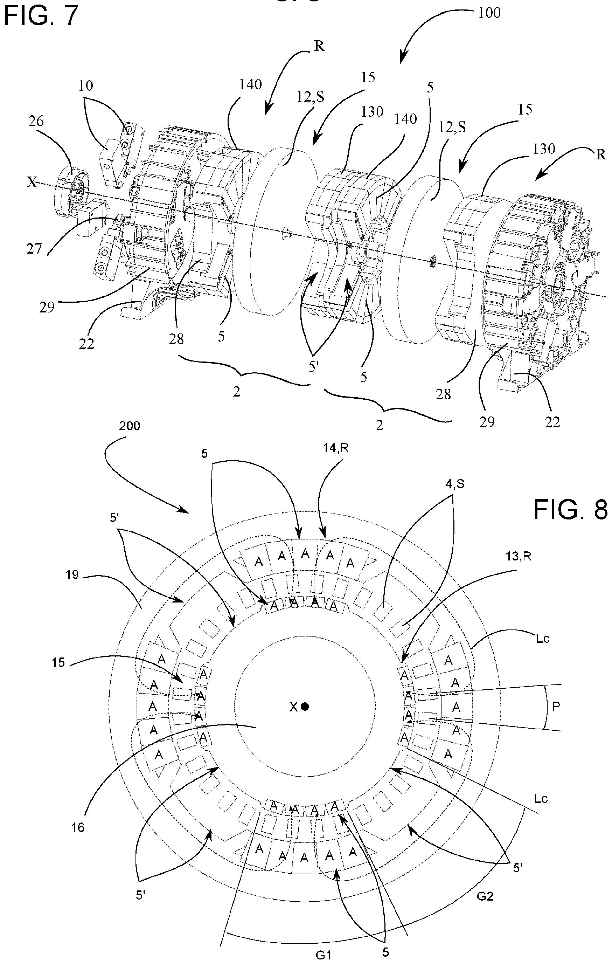

Le convertisseur magnétothermique 2 de la figure 2 est représenté plus en détail dans les figures 3 et 4, dans une configuration rotative, sans que cet exemple ne soit limitatif. Une configuration linéaire est tout à fait envisageable, dans laquelle le stator S et le rotor R sont mis à plat. Il entre dans une machine de conversion 1 telle que représentée dans les figures 5 à 7. Les éléments actifs 4 sont portés par un support 12 (fig. 7), de forme annulaire ou discale, centré sur l'axe X. Le support 12 constitue ou fait partie intégrante d'un stator S fixe. Le rotor R est également de forme annulaire ou discale, centré sur l'axe X, complémentaire au stator S. Le rotor R est constitué, dans l'exemple des figures 3 et 4, de deux rotors 13, 14 superposés radialement : un rotor interne 13 et un rotor externe 14, coaxiaux et centrés sur l'axe X, séparés entre eux par un entrefer 15 dans lequel est logé le stator S. Cette configuration n'est pas limitative puisque les deux rotors peuvent également être superposés axialement (voir figure 7). Cette configuration permet d'intensifier le champ magnétique dans l'entrefer 15 et d'augmenter l'efficacité de l'entrainement magnétique du rotor R par les éléments actifs 4 alternant les phases paramagnétiques et ferromagnétiques puisqu'ils sont alternativement face à un pôle magnétique 5 quand ils sont en phase paramagnétique et face à un pôle non-magnétique 5' quand ils sont en phase ferromagnétique, créant en permanence un déséquilibre magnétique dans le rotor R. Dans cette configuration, dans laquelle le stator S est logé dans l'entrefer 15 entre les deux rotors 13, 14, les effets magnétiques des rotors 13, 14 et ceux des éléments actifs 4 ont l'avantage de se combiner et de s'amplifier en ayant pour effet d'augmenter l'énergie mécanique produite.

Les rotors intérieur 13 et extérieur 14 comportent un même nombre de pôles magnétiques 5 et de pôles non magnétiques 5'. On appelle « pôle non magnétique », un pôle qui ne génère pas de champ magnétique et qui de fait ne comprend pas d'aimant ou de ferrite, ni tout autre moyen générant un champ magnétique. En outre et pour chaque rotor 13, 14, le nombre de pôles magnétiques 5 est égal au nombre de pôles non magnétiques 5'. Les rotors intérieur 13 et extérieur 14 sont couplés entre eux pour tourner de manière synchrone. Ils peuvent être couplés par une transmission mécanique, telle qu'un train d'engrenage, un système courroie et poulie, un système chaine et pignon, ou similaire. Ils peuvent également être couplés entre eux magnétiquement, donc sans contact. Dans l'exemple des figures 3 et 4, le rotor R comporte quatre pôles magnétiques 5 et quatre pôles non magnétiques 5' alternés et régulièrement répartis. Ainsi, ils s'étendent chacun sur un secteur angulaire de même valeur. Bien entendu, le nombre de pôles magnétiques 5 n'est pas limité à quatre et peut être égal à deux (voir figure 7) ou supérieur à quatre.

Le rotor interne 13 présente une forme cylindrique et comporte un noyau central 16 de préférence amagnétique ou peu magnétique. Il peut être creux et vide, ajouré ou plein et réalisé dans un matériau tel que l'aluminium, l'inox, ou similaire. Le rotor interne 13 comporte des aimants A, tels que des aimants permanents ou des ferrites, répartis en quatre paires d'aimants A, reliés entre eux par des pièces magnétiques 17 pour former quatre pôles magnétiques 5, répartis à angle droit l'un par rapport à l'autre autour du noyau central 16. Les pièces magnétiques 17 peuvent être réalisées en fer doux, acier doux, ou similaire. Il peut être complété par des déflecteurs 18 de préférence magnétisable, ferromagnétique ou magnétique, disposés à la périphérie extérieure du rotor interne 13, au droit des pôles non-magnétiques 5' et entre deux pièces magnétiques 17, pour canaliser et concentre le flux magnétique Le uniquement dans les pôles magnétiques 5 et l'entrefer 15 correspondant, ayant pour effet de limiter voire de supprimer les éventuelles fuites de lignes de champ

Le rotor externe 14 comporte une carcasse magnétique 19. Elle peut être réalisée en fer doux, acier doux, ou similaire. Elle porte des aimants A ou des ferrites, répartis en quatre groupes de six aimants A, pour former quatre pôles magnétiques 5, répartis à angle droit l'un par rapport à l'autre. Les pôles non magnétiques 5' qui sont vides d'aimants A peuvent comporter un déflecteur 20 de préférence magnétisable, ferromagnétique ou magnétique, disposé à la périphérie intérieure du rotor externe 14, pour canaliser le flux magnétique et concentre le flux magnétique Le uniquement dans les pôles magnétiques 5 et l'entrefer 15 correspondant, ayant pour effet de limiter voire de supprimer les éventuelles fuites de lignes de champ. Les vecteurs magnétiques Vm et les lignes de champ Le sont représentés schématiquement à la figure 3. Le flux magnétique produit par chaque pôle magnétique 5 du rotor interne 13 se referme sur lui-même en passant par l'entrefer 15, le stator S, les pôles magnétiques 5 correspondant du rotor externe 14 et la carcasse magnétique 19.

Les pôles magnétiques 5 du rotor R peuvent comporter avantageusement des aimants permanents ou des ferrites, chaque pôle pouvant être formé d'un ou de plusieurs aimants permanents. Les aimants A sont choisis pour générer une densité de flux magnétique d'au moins 0,2 à 2 Teslas. Ils peuvent aussi comporter d'autres générateurs de champ magnétique, tels que ceux choisis dans le groupe comprenant un assemblage magnétique (combinaison d'aimants permanents et/ou de ferrites et de pièces magnétiques), un électro-aimant, un aimant supraconducteur, un électro-aimant supraconducteur, un supraconducteur. Par conséquent, le terme « aimant A » utilisé dans la description s'étend à toutes les formes de réalisation de générateurs de champ magnétique.

La figure 4 montre uniquement le rotor R de la figure 3 en perspective, sans le stator S. La carcasse 19 peut être réalisée en une ou plusieurs pièces, et par exemple en quatre pièces identiques 19a, 19b, 19c, 19d, assemblées par des formes d'emboîtement complémentaires. Tout autre moyen de construction peut bien entendu convenir.

Dans une variante de réalisation non illustrée, le rotor R peut ne comporter qu'un seul rotor. Dans ce cas, la machine de conversion 1 comporte une carcasse magnétique fixe disposée à l'opposé du rotor R par rapport au stator S pour créer un entrefer dans lequel est logé ledit stator S. La carcasse magnétique peut être liée au stator S. Elle peut être réalisée en fer doux, acier doux, ou similaire, pour canaliser le flux magnétique généré par les aimants A du rotor R et fermer les lignes de champ Le sur les pôles magnétiques 5 du rotor R en passant par le stator S.

Encore dans une autre variante de réalisation non représentée, au moins un des pôles magnétiques 5 du stator S ou du rotor R peut être décalé angulairement par rapport aux autres pôles magnétiques 5 qui sont symétriques par rapport à l'axe X, dans le but d'introduire un déséquilibre magnétique permanent entre le stator S et le rotor R. Ce décalage angulaire est effectué à la construction du rotor R ou du stator S. Dans le cas d'une machine linéaire, le décalage est introduit au niveau du pas qui sépare les pôles magnétiques.

Le stator S comporte un nombre d'éléments actifs 4 qui est déterminé en fonction du nombre de pôles 5, 5' du convertisseur magnétothermique 2. Le nombre d'éléments actifs 4 est de préférence égal à un multiple du nombre de pôles magnétiques 5 et non magnétiques 5' du rotor R, ce multiple pouvant être égal à un. Dans l'exemple représenté dans les figures 3 et 4, le nombre d'éléments actifs 4 est égal à vingt-quatre, soit un multiple égal à trois pour huit pôles 5, 5'. Ainsi on obtient une répartition de trois éléments actifs 4 par pôle magnétique 5 et trois éléments actifs 4 par pôles non magnétiques 5'. Les éléments actifs 4 sont répartis sur le périmètre du stator S, et séparés entre eux d'un pas P, qui est de préférence régulier et le plus faible possible pour maximiser la quantité d'éléments actifs 4 dans le stator S. Ils sont en outre assemblés en un premier groupe G1 d'éléments actifs 4 et en un second groupe G2 d'éléments actifs 4. Les éléments actifs 4 du premier groupe G1 sont alternés avec les éléments actifs 4 du second groupe G2 de sorte à créer une alternance magnétique dans le stator S entre des éléments actifs 4 dans un état ferromagnétique favorisant le passage d'un flux magnétique, et des éléments actifs 4 dans un état paramagnétique empêchant le passage d'un flux magnétique. Cette disposition alternée correspond à la disposition alternée des pôles magnétiques 5 et des pôles non magnétiques 5', comme visible sur la figure 3. En outre, l'alternance magnétique générée au sein du stator S varie selon les cycles thermiques générés par l'unité de modulation thermique pour créer en permanence un déséquilibre magnétique entre le stator S et le rotor R et engendrer un déplacement du rotor R pour créer de l'énergie mécanique.

Le stator S ou le support 12 des éléments actifs 4 est de préférence réalisé dans une matière thermiquement isolante et magnétiquement neutre, telle qu'à titre d'exemple une matière synthétique à base de polymère, une matière composite à base de fibres de carbone, un acier inoxydable, une matière naturelle à base de silice ou résine, ou similaire. Il comporte en outre des raccords fluidiques 21 (voir figures 5 et 6) pour mettre en communication le circuit fluidique 6 avec les éléments actifs 4. Les éléments actifs 4 étant fixes, les raccords fluidiques 21 sont des raccords simples, non tournants. Ils forment les orifices d'entrée et les orifices de sortie du fluide dans ou à proximité de chaque élément actif 4 et permettent de raccorder les tuyaux (non représentés) formant les boucles fluidiques 61, 62 (voir figure 2). Les éléments actifs 4 comportent à cet effet des passages fluidiques (non représentés) qui peuvent être définis par une forme choisie dans le groupe comprenant des pores, des perforations, des rainures, des fentes, des interstices, ou une combinaison de ces formes. Ces formes peuvent être en outre obtenues par laminage, extrusion, usinage, impression tridimensionnelle, gravure chimique, ionique ou mécanique, formage, intercalaire entre blocs, plaques ou lames, espaces entre particules, orifices dans un bloc poreux, ou une combinaison de ces moyens. Les passages fluidiques sont de préférence de petite taille comprise entre 0.01 mm et 5 mm et de préférence égale à 0.15 mm apte à créer un écoulement du fluide caloporteur au travers des éléments actifs 4, sans que ces valeurs ne soient limitatives. On privilégiera un écoulement sensiblement laminaire.

Dans le cas d'un convertisseur magnétothermique 2 de configuration annulaire, telle que celle représentée dans les figures 3 à 6 et 8, le stator S et les rotors R, 13, 14 sont superposés radialement et s'étendent axialement parallèlement à l'axe X. Les éléments actifs 4 peuvent ainsi se présenter sous la forme de barreaux qui s'étendent également axialement. Les barreaux d'éléments actifs 4 peuvent être obtenus de différentes manières, à partir de blocs poreux, de blocs perforés, de lames ou de plaques empilées et séparées entre-elles par des intercalaires ou tout autre moyen similaire pour créer des passages fluidiques. Les barreaux d'éléments actifs 4 ont avantageusement une forme géométrique parallélépipédique, constitués de lames de matériaux rectangulaires, minces, identiques, empilées radialement ou axialement, parallèlement entre-elles et séparées entre-elles par un intervalle formant lesdits passages fluidiques. A titre d'exemple, les lames de matériaux peuvent avoir une longueur comprise entre 10 mm et 150 mm, une hauteur ou une largeur comprise entre 10 mm et 48 mm, et une épaisseur comprise entre de 0.1 mm à 4 mm, sans que ces valeurs ne soient limitatives. Elles sont regroupées en paquets de N lames, N pouvant être compris entre 10 et 150 par exemple, pour former les barreaux d'éléments actifs 4, sans que ces valeurs ne soient limitatives. Les lames de matériaux d'un même paquet peuvent être maintenues entre elles par tout moyen adéquat, tel que par exemple des déformations locales dans leur épaisseur pour créer des points d'appui, un intercalaire, un profil en forme de U ou de L, un intercalaire formé d'une épaisseur calibrée de colle. Chaque élément actif 4 forme ainsi une pièce monobloc qui peut être placée dans un logement rectangulaire indépendant prévu dans le stator S ou le support 12. Cet agencement permet de démonter indépendamment chaque élément actif 4 du stator S sans démonter l'ensemble des éléments actifs 4, ce qui simplifie grandement la fabrication et la mise en oeuvre desdits éléments actifs 4.

Les passages fluidiques plats et étroits ont l'avantage de favoriser un écoulement laminaire du fluide caloporteur parallèlement à l'axe X. En outre, ils ont l'avantage de déboucher axialement des éléments actifs 4 permettant de disposer les raccords fluidiques 21 dans au moins une des extrémités axiales du stator S. Les raccords fluidiques 21 se situent alors à proximité des distributeurs fluidiques 10, permettant de réduire à son minimum la longueur de la tuyauterie des boucles fluidiques 61, 62. Cette configuration de machine annulaire et d'éléments actifs en forme de barreau offre par conséquent plusieurs avantages : faciliter la fabrication des éléments actifs 4 sous la forme de barreaux indépendants, simplifier le montage et le démontage des éléments actifs 4 dans le stator S et du convertisseur magnétothermique 2 en général, standardiser les composants et réduire les coûts de revient, simplifier le circuit fluidique et réduire les pertes de charge en raccourcissant la tuyauterie. Cette configuration de machine annulaire et d'éléments actifs en forme de barreau permet en outre d'augmenter aisément la puissance de la machine en augmentant la longueur des barreaux d'éléments actifs 4, donc la longueur de la machine, sans augmenter sa dimension radiale, ce qui est avantageux en termes de compacité et d'encombrement de la machine. Bien entendu, la configuration annulaire du convertisseur magnétothermique 2 peut être mise à plat dans le cas d'une machine linéaire et non rotative.

Les figures 5 et 6 illustrent un exemple de machine de conversion 1 selon l'invention, non carénée, pourvue de piétements 22 permettant de fixer la machine sur n'importe quelle surface de réception. Le convertisseur électromécanique 3 couplé au convertisseur magnétothermique 2 est de préférence un générateur électrique agencé pour produire une énergie électrique E (voir figure 2) à partir de l'énergie mécanique transmise par le rotor R du convertisseur magnétothermique 2. Le rotor 23 du générateur électrique est par conséquent couplé au rotor R, soit directement (voir figure 2), soit par l'intermédiaire d'un réducteur ou d'un multiplicateur de vitesse 24 permettant d'adapter les vitesses des deux rotors 23, R (voir figure 6). Ces figures 5 et 6 illustrent le guidage en rotation du rotor externe 14 au moyen de galets 25 sur roulement, sans que cet exemple ne soit limitatif. La figure 5 illustre en outre le système de synchronisation et distribution fluidique. Il comporte les distributeurs fluidiques 10 situés sur une extrémité axiale du stator S et répartis radialement autour de l'axe X. Ils sont commandés dans cet exemple par le rotor R du convertisseur magnétothermique 2 via une transmission par came 26 qui permet d'actionner alternativement les tiroirs 27 des distributeurs fluidiques 10. La fréquence de commutation est synchronisée automatiquement avec la vitesse de rotation du rotor R. Cet exemple n'est pas limitatif comme expliqué précédemment.

La figure 8 est une vue similaire à la figure 3 et illustre un convertisseur magnétothermique 200 selon une autre variante de réalisation du rotor R. Dans cet exemple, le rotor R est également constitué d'un rotor interne 13 et d'un rotor externe 14 superposés radialement, et séparés entre eux par un entrefer 15 dans lequel est logé le stator S et les éléments actifs 4. Dans cet exemple, les rotors interne 13 et externe 14 sont conçus très simplement, puisque les pôles magnétiques 5 de chacun des rotors 13, 14 sont constitués d'aimants A ou de ferrites, et les pôles non-magnétiques 5' sont vides. Comme dans l'exemple précédent, le nombre d'éléments actifs 4 est un multiple du nombre des pôles magnétiques 5 et non magnétiques 5', et par exemple égal à 32, soit un multiple de 4 pour 8 pôles.

La figure 7 illustre une vue éclatée d'un autre exemple de machine de conversion 100 selon l'invention conçue de manière modulaire pour pouvoir adapter sa structure à la puissance électrique que l'on souhaite produire. Elle comporte deux convertisseurs magnétothermiques 2, superposés axialement dans l'axe X, sans que cet exemple ne soit limitatif. Dans ce cas, deux stators S sont prévus, soit un stator S dans chaque convertisseur magnétique 2. Cet exemple n'est pas non plus limitatif, car le nombre de stators S ou de supports 12 peut être supérieur à un. Dans cet exemple, la configuration des rotors R et des stators S est différente de l'exemple précédent. Ce n'est plus une configuration annulaire mais discale, qui peut dans certains convenir également. Les rotors R présentent une forme de disque et comportent chacun deux pôles magnétiques 5 diamétralement opposés, supportés par un plateau magnétique 28. Les deux pôles magnétiques 5 sont alternés avec deux pôles non magnétiques 5' restés vides. Le nombre de pôles magnétiques 5 n'est bien entendu pas limitatif et peut être supérieur à deux. Les pôles magnétiques 5 sont formés chacun par un assemblage magnétique A orienté radialement. Le rotor R de chaque convertisseur magnétothermique 2 comporte deux rotors 130, 140 identiques, superposés axialement, disposés en miroir par rapport à un plan perpendiculaire à l'axe X, et définissant entre eux un entrefer 15 dans lequel est logé un stator S. Chaque stator S se présente également sous la forme d'un disque et comporte des éléments actifs 4 (non représentés) orientés radialement en regard des pôles magnétiques 5 et des pôles non magnétiques 5'. Cet assemblage modulaire est rassemblé dans une enveloppe 29 de préférence amagnétique, formant un carénage, supporté par des piétements 22. Comme dans l'exemple des figures 5 et 6, les distributeurs fluidiques 10 sont situés à une extrémité axiale du stator S et répartis radialement autour de l'axe X. A l'inverse de l'exemple précédent, les passages fluidiques prévus dans les éléments actifs 4 débouchent radialement et nécessitent une longueur de tuyauterie plus importante pour être raccordés aux distributeurs fluidiques 10 que dans la configuration annulaire décrite en référence aux figures 3 à 6 et 8. Les distributeurs fluidiques 10 sont commandés par les rotors R des convertisseurs magnétothermiques 2 via une transmission par came 26 qui permet d'actionner alternativement les tiroirs 27 des distributeurs fluidiques 10. Dans cette configuration modulaire, les éléments actifs 4 peuvent bien entendu être raccordés en série, en parallèle ou selon une combinaison série-parallèle dans ledit circuit fluidique 6.

La machine de conversion 1, 100 selon l'invention est avantageusement réversible et peut fonctionner en sens inverse, pour convertir de l'énergie électrique en énergie thermique. Elle exploite dans ce cas l'effet magnétocalorique de certains matériaux qui consiste en un changement de température d'un matériau magnétique soumis à un champ magnétique externe. Cette technologie utilisée pour créer du froid magnétique est connue depuis plus d'une trentaine d'années et on sait les avantages qu'elle apporte en termes d'écologie et de développement durable. Elle peut utiliser les mêmes matériaux à transition de phase magnétique que ceux décrits précédemment, mais en exploitant leur effet magnétocalorique. Un exemple est notamment décrit dans la publication WO 2008/012411.

En outre, la configuration du convertisseur magnétothermique 2, 200 qui a été pensée et conçue pour exploiter les chaleurs fatales avec le plus d'efficacité possible et un rendement le plus élevé possible, se prête particulièrement bien à la production de froid magnétique. En conséquence, la machine de conversion 1, 100 illustrée dans les figures 2 à 8, peut fonctionner en mode froid magnétique, seul le générateur électrique 3 est remplacé par un actionneur, tel qu'un moteur électrique ou similaire, couplé au rotor R pour soumettre les éléments actifs 4 à un champ magnétique variable et créer alternativement dans lesdits éléments actifs 4 un cycle magnétocalorique d'échauffement et un cycle magnétocalorique de refroidissement. Le circuit fluidique 6 reste le même et les échangeurs de chaleur S1 et S2 deviennent respectivement les échangeurs chaud et froid de la machine de froid magnétique. Tous les autres composants du convertisseur magnétothermique 2, 200 sont identiques.

En outre, les éléments actifs 4 peuvent comporter plusieurs types de matériaux magnétocaloriques et réagir à différentes températures, ce qui génère un gradient thermique le long des éléments actifs 4. Ainsi, les matériaux magnétocaloriques constituant les éléments actifs 4 peuvent présenter des températures de Curie différentes, ordonnées selon un ordre croissant ou décroissant, ayant pour effet de générer des gradients de température de plus grande amplitude. Lorsque les éléments actifs 4 sont en forme de barreaux, les barreaux peuvent être constitués de tronçons ou de blocs successifs de matériaux magnétocaloriques différents ayant des températures de Curie croissantes ou décroissantes.

La présente invention n'est bien entendu pas limitée aux exemples de réalisation décrits mais s'étend à toute modification et variante évidentes pour un homme du métier dans la limite des revendications annexées. Les variantes de réalisation indiquées pour un des exemples de réalisation s'appliquent bien entendu aux autres exemples de réalisation.

## Revendications

1. Machine de conversion (1) d'énergie thermique en énergie électrique ou inversement d'énergie électrique en énergie thermique, ladite machine de conversion comportant au moins un convertisseur magnétothermique (2, 200) agencé pour convertir une variation de température en énergie mécanique ou une variation de champ magnétique en énergie thermique, ledit convertisseur magnétothermique (2, 200) comportant des éléments actifs (4) à transition de phase magnétique ou thermique, et une unité de modulation thermique ou magnétique agencée pour soumettre lesdits éléments actifs (4) à une variation de température ou à une variation de champ magnétique ayant pour effet de faire varier respectivement l'état magnétique desdits éléments actifs (4) ou la température desdits éléments actifs (4), et au moins un circuit fluidique (6) fermé, interne audit convertisseur magnétothermique (2, 200), dans lequel circule un fluide caloporteur en circuit fermé au travers desdits éléments actifs (4) et d'au moins un échangeur thermique, agencé pour coupler thermiquement lesdits éléments actifs (4) à au moins un dispositif externe par l'intermédiaire dudit au moins un échangeur thermique (E1, E2), ledit convertisseur magnétothermique (2, 200) comportant un stator (S) fixe pourvu desdits éléments actifs (4), lesdits éléments actifs (4) étant répartis dans ledit stator (S) en un premier groupe (G1) d'éléments actifs (4) dans un premier état magnétique ou thermique, et en un second groupe (G2) d'éléments actifs (4) dans un second état magnétique ou thermique différent dudit premier état magnétique ou thermique, les éléments actifs du premier groupe (G1) étant alternés avec les éléments actifs du second groupe (G2) de sorte à créer une alternance entre des éléments actifs (4) dans ledit premier état magnétique ou thermique et des éléments actifs (4) dans ledit second état magnétique ou thermique, et ledit convertisseur magnétothermique (2, 200) comportant en outre au moins un rotor (R, 13, 14) mobile en translation ou en rotation par rapport audit stator (S), ledit rotor (R, 13, 14) étant pourvu à égalité de pôles magnétiques (5) et de pôles non magnétiques (5') alternés et régulièrement répartis, de telle sorte qu'ils s'étendent chacun sur un secteur angulaire de même valeur, la disposition alternée des pôles magnétiques (5) et des pôles non magnétiques (5') correspondant à la disposition alternée des éléments actifs (4) dudit premier groupe (G1) et des éléments actifs (4) dudit second groupe (G2), de telle sorte que lorsqu'un élément actif (4) dudit premier groupe (G1) est face à un pôle magnétique (5), un élément actif (4) dudit second groupe (G2) est face à un pôle non magnétique (5'), et inversement.

2. Machine de conversion selon la revendication 1, **caractérisée en ce que** ledit convertisseur magnétothermique (2, 200) comporte une carcasse magnétique fixe superposée audit rotor (R) pour délimiter entre eux un entrefer dans lequel est disposé ledit stator (S), ladite carcasse magnétique étant agencée pour canaliser le flux magnétique et fermer les lignes de champ (Lc) des pôles magnétiques (5) dudit rotor (R) à travers ledit stator (S) et lesdits éléments actifs (4).

3. Machine de conversion selon la revendication 1, **caractérisée en ce que** ledit convertisseur magnétothermique (2, 200) comporte deux rotors (13, 14) superposés pour délimiter entre eux un entrefer (15) dans lequel est disposé ledit stator (S), les deux rotors (13, 14) ayant le même nombre de pôles magnétiques (5) et non magnétiques (5'), et étant agencés pour canaliser le flux magnétique et fermer les lignes de champ (Lc) des pôles magnétiques (5) des deux rotors (13, 14) à travers ledit stator (S) et lesdits éléments actifs (4), et **en ce que** les deux rotors (13, 14) sont couplés entre eux par une liaison mécanique ou par un couplage magnétique.

4. Machine de conversion selon l'une quelconque des revendications précédentes, **caractérisée en ce que** ledit stator (S) comporte ou forme un support (12) thermiquement isolant, sur lequel sont fixés lesdits éléments actifs (4), ainsi que des raccords fluidiques (21) pour mettre en communication ledit circuit fluidique (6) avec lesdits éléments actifs (4), et **en ce que** lesdits éléments actifs (4) sont répartis sur ledit stator (S) et séparés entre eux d'un pas (P) de préférence régulier et le plus faible possible pour maximiser la quantité d'éléments actifs (4) dans ledit stator (S).

5. Machine de conversion selon l'une quelconque des revendications précédentes, **caractérisée en ce que** ledit stator (S) comporte un nombre d'éléments actifs (4) qui est un multiple du nombre de pôles magnétiques (5) et non magnétiques (5') dudit au moins un rotor (R, 13, 14), et **en ce que** lesdits éléments actifs (4) comportent des passages fluidiques pour permettre audit fluide caloporteur de circuler au travers desdits éléments actifs (4).

6. Machine de conversion selon l'une quelconque des revendications précédentes, **caractérisée en ce que** ledit circuit fluidique (6) comporte une pompe (7), deux échangeurs de chaleur (E1, E2) et deux boucles de circulation (61, 62) pour ledit fluide caloporteur raccordées en parallèle par un système de synchronisation, et **en ce que** ledit système de synchronisation est agencé pour raccorder en série lesdits éléments actifs (4) respectivement dudit premier groupe (G1) et dudit second groupe (G2) avec lesdits échangeurs de chaleur (E1, E2) alternativement dans l'une et l'autre desdites boucles de circulation (61, 62) et créer une alternance de cycles thermiques ou magnétocaloriques à une fréquence de commutation déterminée, et **en ce que** ledit système de synchronisation comporte des distributeurs fluidiques (10) commandés selon ladite fréquence de commutation déterminée par un actionneur (11) choisi parmi les actionneurs mécaniques, hydrauliques, électrique et/ou électroniques, et agencés pour faire circuler ledit fluide caloporteur alternativement dans lesdits éléments actifs (4) dans un sens dans ladite première boucle de circulation (61) et dans le sens contraire dans ladite seconde boucle de circulation (62).

7. Machine de conversion selon la revendication 6, **caractérisée en ce que** lesdits distributeurs fluidiques (10) sont commandés par ledit au moins un rotor (R, 13, 14) du convertisseur magnétothermique (2) et une transmission par came mécanique (26), par un moteur auxiliaire à vitesse variable et une transmission par came mécanique (26), ou par une came électrique ou électronique programmable.

8. Machine de conversion selon la revendication 6, **caractérisée en ce que** ledit circuit fluidique (6) comporte en outre des organes de contrôle (9) du sens de circulation dudit fluide caloporteur agencés pour faire circuler le fluide caloporteur dans chacun desdits échangeurs de chaleur (E1, E2) dans un unique sens de circulation.

9. Machine de conversion selon l'une quelconque des revendications précédentes, **caractérisée en ce que** ledit convertisseur magnétothermique (2) présente une configuration annulaire, ledit stator (S) et ledit au moins un rotor (R, 13, 14) étant superposés radialement et s'étendant axialement, **en ce qu'**au moins une partie des passages fluidiques prévus dans lesdits éléments actifs (4) débouchent axialement, et **en ce que** lesdits raccords fluidiques (21) sont disposés dans au moins une extrémité axiale dudit stator (S).

10. Machine de conversion selon la revendication 9, **caractérisée en ce que** lesdits éléments actifs (4) se présentent sous la forme de barreaux, s'étendant axialement dans ledit stator (S), et sont constitués chacun d'un bloc de matériau poreux ou d'un bloc de lames de matériau superposées et délimitant entre elles lesdits passages fluidiques.

11. Machine de conversion selon l'une quelconque des revendications précédentes, **caractérisée en ce que** lesdits éléments actifs (4) comportent un assemblage de plusieurs matériaux magnétocaloriques de températures de Curie différentes, ordonnées selon un ordre croissant ou décroissant.

12. Machine de conversion (1) selon l'une quelconque des revendications précédentes, destinée à convertir de l'énergie électrique en énergie thermique, **caractérisée en ce qu'**elle comporte en outre un actionneur couplé audit au moins un rotor (R, 13, 14) dudit convertisseur magnétothermique (2, 200) pour soumettre lesdits éléments actifs (4) à un champ magnétique variable et créer alternativement dans lesdits éléments actifs (4) un cycle magnétocalorique d'échauffement et un cycle magnétocalorique de refroidissement, **en ce que** ledit circuit fluidique (6) est couplé d'une part audit stator (S) pour collecter l'énergie thermique produite par lesdits éléments actifs (4), et d'autre part à un dispositif externe par l'intermédiaire d'au moins un échangeur de chaleur (E1, E2) pour transférer l'énergie thermique produite et simultanément isoler ladite machine de conversion (1) dudit au moins un dispositif externe, **en ce que** ladite unité de modulation magnétique comporte ledit au moins un rotor (R, 13, 14), et un système de synchronisation agencé pour synchroniser la circulation du fluide caloporteur du circuit fluidique (6) dans lesdits éléments actifs (4) avec lesdits cycles magnétocaloriques.

13. Machine de conversion (1) selon l'une quelconque des revendications 1 à 11, destinée à convertir de l'énergie thermique en énergie électrique à partir d'une première source thermique (S1) à une première température (T1) et d'une seconde source thermique (S2) à une seconde température (T2) différente de la première température (T1), **caractérisée en ce qu'**elle comporte en outre un convertisseur électromécanique (3) couplé audit au moins un rotor (R, 13, 14) dudit convertisseur magnétothermique (2, 200) pour convertir de l'énergie mécanique en énergie électrique, **en ce que** ledit circuit fluidique (6) est couplé d'une part à ladite première source thermique (S1) par l'intermédiaire d'un premier échangeur de chaleur (E1) et à ladite seconde source thermique (S2) par l'intermédiaire d'un second échangeur de chaleur (E2) pour collecter l'énergie thermique et simultanément isoler ladite machine de conversion (1) desdites sources thermiques, et est couplé d'autre part audit stator (S) pour transférer l'énergie thermique collectée auxdits éléments actifs (4), et **en ce que** ladite unité de modulation thermique comporte un système de synchronisation agencé pour soumettre lesdits éléments actifs (4) à des variations de température, générer un déséquilibre magnétique permanent entre ledit au moins un rotor (R, 13, 14) et ledit stator (S), et engendrer un déplacement dudit au moins un rotor (R, 13, 14) pour créer ladite énergie mécanique.

14. Machine de conversion selon la revendication 13, **caractérisée en ce que** ledit convertisseur électromécanique (3) est un générateur électrique, le rotor (23) dudit générateur électrique étant couplé audit au moins un rotor (R, 13, 14) dudit convertisseur magnétothermique (2) directement ou par l'intermédiaire d'un réducteur ou d'un multiplicateur de vitesse (24) pour adapter les vitesses desdits rotors (R, 13, 14 ; 23).

15. Utilisation d'une machine de conversion (1) d'énergie thermique en énergie électrique selon l'une quelconque des revendications 13 et 14 pour récupérer l'énergie thermique issue de chaleurs fatales perdues dans une plage de température de -100°C à +100°C, et dans laquelle la différence de température entre la première source thermique (S1) et la seconde source thermique (S2) est au moins égale à 10°C.

## Patentansprüche

1. Maschine zur Umwandlung (1) von Wärmeenergie in elektrische Energie oder umgekehrt von elektrischer Energie in Wärmeenergie, dieser Energiewandler umfasst mindestens einen thermomagnetischen Generator (2, 200), vorgesehen zur Umwandlung einer Temperaturschwankung in mechanische Energie oder einer Schwankung des Magnetfeldes in Wärmeenergie, dieser thermomagnetische Generator (2, 200) umfasst dabei aktive Elemente (4) der magnetischen oder thermischen Übergangsphase, und eine thermische oder magnetische Modulationseinheit, dazu vorgesehen, diese aktiven Elemente (4) einer Temperaturschwankung oder einer Schwankung des Magnetfeldes auszusetzen, die dazu führt, dass sich entweder der magnetische Zustand dieser aktiven Elemente (4) oder die Temperatur dieser aktiven Elemente (4) verändert, dazu umfasst er mindestens einen geschlossenen Flüssigkeitsstromkreis (6), innerhalb dieses thermomagnetischen Generators (2, 200), in dem eine Wärmeträgerflüssigkeit in geschlossenem Kreislauf durch diese aktiven Elemente (4) zirkuliert und mindestens einen Wärmetauscher, vorgesehen zur thermischen Kopplung dieser aktiven Elemente (4) an mindestens eine externe Vorrichtung über diesen mindestens einen Wärmetauscher (E1, E2), der erwähnte thermomagnetische Generator (2, 200) umfasst dabei einen starren Stator (S) ausgerüstet mit diesen aktiven Elementen (4), diese aktiven Elemente (4) sind in diesem Stator (S) aufgeteilt in eine erste Gruppe (G1) aktiver Elemente (4) in einem ersten magnetischen oder thermischen Zustand und in eine zweite Gruppe (G2) aktiver Elemente (4) in einem zweiten magnetischen oder thermischen Zustand, der sich von diesem ersten magnetischen oder thermischen Zustand unterscheidet, die aktiven Elemente der ersten Gruppe (G1) wechseln sich mit den aktiven Elementen der zweiten Gruppe (G2) ab, so dass ein Wechsel zwischen aktiven Elementen (4) im erwähnten ersten magnetischen oder thermischen Zustand und aktiven Elementen (4) im erwähnten zweiten magnetischen oder thermischen Zustand erzeugt wird, zudem umfasst der thermomagnetische Generator (2, 200) außerdem mindestens einen Rotor (R, 13, 14), verschiebbar oder drehbar beweglich bezogen auf den erwähnten Stator (S), dieser Rotor (R, 13, 14) ist mit der gleichen Anzahl magnetischer (5) und nicht-magnetischer (5') Pole ausgerüstet, diese sind abwechselnd und regelmäßig verteilt, so dass sie sich jeweils über einen Winkelsektor mit demselben Wert verteilen, die abwechselnde Anordnung von magnetischen (5) und nicht -magnetischen (5') Polen entspricht dabei der abwechselnden Anordnung der aktiven Elemente (4) der erwähnten ersten Gruppe (G1) und der aktiven Elemente (4) dieser zweiten Gruppe (G2), so dass, wenn sich ein aktives Element (4) dieser ersten Gruppe (G1) vor einem magnetischen Pol (5) befindet, ein aktives Element (4) dieser zweiten Gruppe (G2) sich vor einem nicht- magnetischen Pol (5') befindet, und umgekehrt.

2. Energiewandler nach Anspruch 1, **dadurch gekennzeichnet, dass** der erwähnte thermomagnetische Generator (2, 200) ein festes magnetisches Gehäuse enthält, über diesem Rotor (R) angeordnet, um dazwischen einen Spalt zu begrenzen, in dem dieser Stator (S) untergebracht ist, dieses magnetische Gehäuse ist dazu ausgelegt, den magnetischen Fluss zu kanalisieren und die Feldlinien (Lc) der Magnetpole (5) dieses Rotors (R) durch diesen Stator (S) und diese aktiven Elemente (4) zu schließen.

3. Energiewandler nach Anspruch 1, **dadurch gekennzeichnet, dass** der erwähnte thermomagnetische Generator (2, 200) zwei über einander angeordnete Rotoren (13, 14) umfasst, um zwischen sich einen Spalt (15) zu begrenzen, in dem dieser Stator (S) angeordnet ist, die beiden Rotoren (13, 14) haben dabei dieselbe Anzahl von magnetischen (5) und nicht-magnetischen Polen (5'), und sind dazu vorgesehen, den magnetischen Fluss zu kanalisieren und die Feldlinien (Lc) der Magnetpole (5) der beiden Rotoren (13, 14) durch diesen Stator (S) und die erwähnten aktiven Elemente (4) zu schließen, und dadurch, dass die beiden Rotoren (13,14) miteinander über eine mechanische Verbindung oder eine magnetische Kopplung verkoppelt sind.

4. Energiewandler nach irgendeinem der vorstehenden Ansprüche, **dadurch gekennzeichnet, dass** der erwähnte Stator (S) einen thermisch isolierenden Halter (12) enthält oder bildet, auf dem diese aktiven Elemente (4) befestigt sind, sowie Flüssigkeitsanschlüsse (21), um diesen Flüssigkeitsstromkreis (6) mit den erwähnten aktiven Elemente (4) zu verbinden und dadurch, dass die aktiven Elemente (4) auf diesem Stator (S) verteilt sind und voneinander durch eine Steigung (P) getrennt sind, die vorzugsweise regelmäßig und möglichst gering sein sollte, um die Menge an aktiven Elementen (4) in diesem Stator (S) zu maximieren.

5. Energiewandler nach irgendeinem der vorstehenden Ansprüche, **dadurch gekennzeichnet, dass** der erwähnte Stator (S) eine Zahl an aktiven Elementen (4) umfasst, die ein Vielfaches der Zahl der magnetischen (5) oder nicht-magnetischen Pole (5') dieses mindestens einen Rotors (R, 13, 14) bildet und dadurch, dass diese aktiven Elemente (4) Flüssigkeitspassagen enthalten, damit die Wärmeträgerflüssigkeit durch diese aktiven Elemente (4) hindurch zirkulieren kann.

6. Energiewandler nach irgendeinem der vorstehenden Ansprüche, **dadurch gekennzeichnet, dass** der erwähnte Flüssigkeitsstromkreis (6) eine Pumpe (7), zwei Wärmetauscher (E1, E2) und zwei Zirkulationsschleifen (61, 62) für diese Wärmeträgerflüssigkeit enthält, parallel angeschlossen über ein Synchronisationssystem, und dass dieses Synchronisationssystem dazu ausgelegt ist, die erwähnten aktiven Elemente (4) jeweils der erwähnten ersten Gruppe (G1) und der erwähnten zweiten Gruppe (G2) in Reihe zu schalten mit den erwähnten Wärmetauschern (E1, E2), alternativ in der einen und der anderen dieser Zirkulationsschleifen (61, 62) und einen Wechsel von thermischen oder magnetokalorischen Zyklen, mit einer festgelegten Schaltfrequenz zu schaffen, und dadurch dass dieses Synchronisationssystem Flüssigkeitsverteiler (10) enthält, die entsprechend dieser festgelegten Schaltfrequenz über einen Schalter (11) gesteuert werden, ausgewählt aus mechanisch, hydraulischen, elektrischen und/ oder elektronischen Schaltern und so vorgesehen, dass die erwähnte Wärmeträgerflüssigkeit alternativ in den erwähnten aktiven Elementen (4) in einer Richtung in der ersten Zirkulationsschleife (61) und in der Gegenrichtung in der erwähnten zweiten Zirkulationsschleife (62) zum Zirkulieren gebracht wird.

7. Energiewandler nach Anspruch 6, **dadurch gekennzeichnet, dass** die erwähnten Flüssigkeitsverteiler (10) vom erwähnten mindestens einen Rotor (R, 13, 14) des thermomagnetischen Generators (2) und einem mechanischen Nockenschaltwerk (26) über einen Hilfsmotor gesteuert werden, mit variabler Geschwindigkeit und einem mechanischen Nockenschaltwerk (26), oder über programmierbare elektrische oder elektronische Nocke.

8. Energiewandler nach Anspruch 6, **dadurch gekennzeichnet, dass** der erwähnte Flüssigkeitsstromkreis (6) außerdem Steuerorgane (9) für die Strömungsrichtung dieser Wärmeträgerflüssigkeit enthält, so ausgelegt, dass die Wärmeträgerflüssigkeit in jedem dieser Wärmetauscher (E1, E2) in einer einzigen Strömungsrichtung zirkuliert.

9. Energiewandler nach irgendeinem der vorstehenden Ansprüche, **dadurch gekennzeichnet, dass** der erwähnte thermomagnetische Generator (2) eine ringförmige Konfiguration aufweist, dieser Stator (S) und dieser mindestens eine Rotor (R, 13, 14) befinden sich dabei radial übereinander und erstrecken sich axial, dadurch dass mindestens ein Teil der in den erwähnten aktiven Elementen (4) vorgesehenen Flüssigkeitspassagen axial mündet und dadurch dass die erwähnten Flüssigkeitsanschlüsse (21) in mindestens einem axialen Ende dieses Stators (S) angeordnet sind.

10. Energiewandler nach Anspruch 9, **dadurch gekennzeichnet, dass** die erwähnten aktiven Elemente (4) die Form von Stäben haben, die axial in diesen Stator (S) reichen und aus einem Block porösen Materials oder einem Block aus Lamellen übereinandergelegten Materials bestehen, die die erwähnten Flüssigkeitspassagen begrenzen.

11. Energiewandler nach irgendeinem der vorstehenden Ansprüche, **dadurch gekennzeichnet, dass** die erwähnten aktiven Elemente (4) eine Kombination mehrerer magnetokalorischer Elemente mit unterschiedlichen Curie-Temperaturen enthalten, angeordnet in ansteigender oder absteigender Reihenfolge.

12. Energiewandler (1) nach irgendeinem der vorstehenden Ansprüche, bestimmt zur Umwandlung von elektrischer Energie in Wärmeenergie, **dadurch gekennzeichnet, dass** er außerdem einen Schalter enthält, gekoppelt an diesen mindestens einen Rotor (R, 13, 14) dieses thermomagnetischen Generators (2, 200) um diese aktiven Elemente (4) einem variablen Magnetfeld auszusetzen und alternativ in diesen aktiven Elementen (4) einen magnetokalorischen Heizzyklus und einen magnetokalorischen Kühlzyklus zu erzeugen und dadurch, dass dieser Flüssigkeitsstromkreis (6) einerseits an den erwähnten Stator (S) gekoppelt ist, um die von diesen aktiven Elemente (4) erzeugte Wärmeenergie zu sammeln und anderseits, mittels des mindestens einen Wärmetauschers (E1, E2) an eine externe Vorrichtung, um die erzeugte Wärmeenergie zu übertragen und gleichzeitig diesen Energiewandler (1) von dieser mindestens einen externen Vorrichtung zu isolieren, dadurch, dass die erwähnte magnetische Modulationseinheit diesen mindestens einen Rotor (R, 13, 14) enthält, sowie ein Synchronisationssystem, vorgesehen zur Synchronisation der Zirkulation der Wärmeträgerflüssigkeit des Flüssigkeitsstromkreises (6) in diesen aktiven Elementen (4) mit diesen magnetokalorischen Zyklen.

13. Energiewandler (1) nach irgendeinem der vorstehenden Ansprüche 1 bis 11, vorgesehen zur Umwandlung von Wärmeenergie in elektrische Energie ausgehend von einer ersten Wärmequelle (SI) mit einer ersten Temperatur (T1) und einer zweiten Wärmequelle (S2) mit einer zweiten Temperatur (T2), die sich von der ersten Temperatur (T1) unterscheidet, **dadurch gekennzeichnet, dass** sie außerdem einen elektromechanischen Wandler (3) enthält, gekoppelt an diesen mindestens einen Rotor (R, 13, 14) dieses thermomagnetischen Generators (2, 200) um mechanische Energie in elektrische Energie umzuwandeln, dadurch, dass der erwähnte Flüssigkeitsstromkreis (6) einerseits an diese erste Wärmequelle (SI) über einen ersten Wärmetauscher (E1) gekoppelt ist und an die zweite Wärmequelle (S2) über einen zweiten Wärmetauscher (E2), um die Wärmeenergie zu sammeln und gleichzeitig diesen Energiewandler (1) von den erwähnten Wärmequellen zu isolieren und andererseits an diesen Stator (S) gekoppelt ist, um die gesammelte Wärmeenergie an diese aktiven Elemente (4) abzugeben, sowie dadurch, dass diese magnetische Modulationseinheit ein Synchronisationssystem enthält, vorgesehen um diese aktiven Elemente (4) Temperaturschwankungen auszusetzen, um ein permanentes magnetisches Ungleichgewicht zwischen dem mindestens einen Rotor (R, 13, 14) und diesem Stator (S) zu schaffen, und eine Verschiebung dieses mindestens einen Rotors (R, 13, 14) zu erreichen um diese mechanische Energie zu erzeugen.

14. Energiewandler nach Anspruch 13, **dadurch gekennzeichnet, dass** der erwähnte elektromechanische Wandler (3) ein Stromgenerator ist, der Rotor (23) dieses Stromgenerators ist dabei an diesem mindestens einen Rotor (R, 13, 14) dieses thermomagnetischen Generators (2) gekoppelt, direkt oder mittels eines Unter- oder Übersetzungsgetriebes (24) um die Geschwindigkeiten dieser Rotoren (R, 13, 14; 23) anzupassen.

15. Verwendung eines Energiewandlers (1) von Wärmeenergie in elektrische Energie nach irgendeinem der vorstehenden Ansprüche 13 und 14 zum Auffangen der Wärmeenergie aus unvermeidlicher Abwärme in einem Temperaturbereich von -100°C bis +100°C, und bei dem der Temperaturunterschied zwischen der ersten Wärmequelle (SI) und der zweiten Wärmequelle (S2) mindestens gleich 10°C ist.

## Claims

1. Machine (1) for converting thermal energy into electrical energy, or conversely, electrical energy into thermal energy, said conversion machine comprising at least one magnetothermal converter (2, 200) arranged to convert a temperature variation into mechanical energy or a magnetic field variation into thermal energy, said thermomagnetic converter (2, 200) comprising active elements (4) with magnetic or thermal phase transition, and a thermal or magnetic modulation unit arranged to expose said active elements (4) to a temperature variation or to a magnetic field variation having for effect to respectively vary the magnetic state of said active elements (4) or the temperature of said active elements (4), and at least one closed circuit (6) inside said magnetothermal converter (2, 200), wherein a heat-transfer fluid circulates in a closed circuit through said active elements (4) and at least one heat exchanger, arranged to thermally couple said active elements (4) with at least one external device by means of said at least one heat exchanger (E1, E2), said magnetothermal converter (2, 200) comprising a fixed stator (S) provided with said active elements (4), said active elements (4) being distributed in said stator (S) into a first group (G1) of active elements (4) in a first magnetic or thermal state, and into a second group (G2) of active elements (4) in a second magnetic or thermal state different from said first magnetic or thermal state, the active elements of the first group (G1) being alternated with the active elements of the second group (G2) so as to create an alternation between active elements (4) in said first magnetic or thermal state and active elements (4) in said second magnetic or thermal state, and said magnetothermal converter (2, 200) further comprising at least one mobile rotor (R, 13, 14) shifting or rotating in relation to said stator (S), said rotor (R, 13, 14) being equally provided with magnetic poles (5) and non-magnetic poles (5') alternated and regularly distributed, such that they each extend over an angular sector of the same value, the alternating arrangement of the magnetic poles (5) and the non-magnetic poles (5') corresponding to the alternating arrangement of the active elements (4) of said first group (G1) and active elements (4) of said second group (G2), such that when an active element (4) of said first group (G1) faces a magnetic pole (5), an active element (4) of said second group (G2) faces a non-magnetic pole (5'), and vice versa.

2. Conversion machine according to claim 1, **characterized in that** said magnetothermal converter (2, 200) comprises a fixed magnetic frame superimposed on said rotor (R) to delimit between them an air gap wherein is arranged said stator (S), said magnetic frame being arranged to channel the magnetic flow and close the field lines (Lc) of the magnetic poles (5) of said rotor (R) through said stator (S) and said active elements (4).

3. Conversion machine according to claim 1, **characterized in that** said magnetothermal converter (2, 200) comprises two rotors (13, 14) superimposed to delimit between them an air gap (15) wherein said stator (S) is arranged, the two rotors (13, 14) having the same number of magnetic (5) and non-magnetic (5') poles, and being arranged to channel the magnetic flow and close the field lines (Lc) of the magnetic poles (5) of the two rotors (13, 14) through said stator (S) and said active elements (4), and **in that** the two rotors (13, 14) are coupled together by mechanical connection or by magnetic coupling.

4. Conversion machine according to any one of the preceding claims, **characterized in that** said stator (S) comprises or forms a thermally insulating support (12), on which are fixed said active elements (4), as well as fluid connections (21) to allow said fluidic circuit (6) to communicate with said active elements (4), and **in that** said active elements (4) are distributed over said stator (S) and separated from each other by a pitch (P) preferably regular and as small as possible to maximize the quantity of active elements (4) in said stator (S).

5. Conversion machine according to any one of the preceding claims, **characterized in that** said stator (S) comprises a number of active elements (4) which is a multiple of the number of magnetic (5) and non-magnetic (5') poles of said at least one rotor (R, 13, 14), and **in that** said active elements (4) comprise fluidic passages to allow said heat-transfer fluid to circulate through said active elements (4).

6. Conversion machine according to any one of the preceding claims, **characterized in that** said fluidic circuit (6) comprises a pump (7), two heat exchangers (E1, E2) and two circulation loops (61, 62) for said heat-transfer fluid connected in parallel by a synchronization system, and **in that** said synchronization system is arranged to connect said active elements (4) respectively from said first group (G1) and from said second group (G2) in series with said heat exchangers (E1, E2) alternately in one and the other of said circulation loops (61, 62) and creating an alternation of thermal or magnetocaloric cycles at a determined switching frequency, and **in that** said synchronization system comprises fluidic distributors (10) controlled according to said determined switching frequency by an actuator (11) selected from mechanical, hydraulic, electric and/or electronic actuators, and arranged to circulate said heat-transfer fluid alternately in said active elements (4) in one direction in said first circulation loop (61), and in the opposite direction in said second circulation loop (62).

7. Conversion machine according to claim 6, **characterized in that** said fluidic distributors (10) are controlled by said at least one rotor (R, 13, 14) of the magnetothermal converter (2) and a mechanical cam transmission (26) by a variable-speed auxiliary motor and a mechanical cam transmission (26), or by a programmable electric or electronic cam.

8. Conversion machine according to claim 6, **characterized in that** the said fluidic circuit (6) further comprises control units (9) for the direction of circulation of said heat-transfer fluid arranged to make the heat-transfer fluid circulate in each of the said heat exchangers (E1, E2) in a single direction of circulation.

9. Conversion machine according to any one of the preceding claims, **characterized in that** said magnetothermal converter (2) has an annular configuration, said stator (S) and said at least one rotor (R, 13, 14) being superimposed radially and extending axially, **in that** at least one part of the fluidic passages provided in said active elements (4) opens axially, and **in that** said fluidic connections (21) are arranged in at least one axial end of said stator (S).

10. Conversion machine according to claim 9, **characterized in that** the said active elements (4) are in the form of bars, extending axially into said stator (S), and each consisting of a block of porous material or of a block of sheets of material superposed and delimiting said fluidic passages between them.

11. Conversion machine according to any one of the preceding claims, **characterized in that** the said active elements (4) comprise an assembly of several magnetocaloric materials of different Curie temperatures, organized in ascending or descending order.

12. Conversion machine (1) according to any one of the preceding claims, intended to convert electrical energy into thermal energy, **characterized in that** it further comprises an actuator coupled with said at least one rotor (R, 13, 14 ) of said magnetothermal converter (2, 200) to expose said active elements (4) to a variable magnetic field and alternately create in said active elements (4) a magnetocaloric heating cycle and a magnetocaloric cooling cycle, **in that** said fluidic circuit (6) is coupled on the one hand with said stator (S) to collect the thermal energy produced by said active elements (4), and on the other hand to an external device by means of at least one heat exchanger (E1, E2) in order to transfer the thermal energy produced and simultaneously isolating said conversion machine (1) from said at least one external device, **in that** said magnetic modulation unit comprises said at least one rotor (R, 13, 14), and a synchronization system arranged to synchronize the circulation of the heat-transfer fluid from the fluidic circuit (6) in the said active elements (4) with the said magnetocaloric cycles.

13. Conversion machine (1) according to any one of claims 1 to 11, intended to convert thermal energy into electrical energy from a first thermal source (S1) at a first temperature (T1) and from a second thermal source (S2) at a second temperature (T2) different from the first temperature (T1), **characterized in that** it further comprises an electromechanical converter (3) coupled with said at least one rotor (R, 13, 14) of said magnetothermal converter (2, 200) to convert mechanical energy into electrical energy, **in that** said fluidic circuit (6) is coupled on the one hand with said first thermal source (S 1) by means of a first heat exchanger (E1) and to said second thermal source (S2) by means of a second heat exchanger (E2) to collect thermal energy and simultaneously isolating said conversion machine (1) from said thermal sources, and is coupled on the other hand with said stator (S) to transfer the thermal energy collected to said active elements (4), and **in that** said thermal modulation unit comprises a synchronization system arranged to expose said active elements (4) to temperature variations, generating a permanent magnetic imbalance between said at least one rotor (R, 13, 14) and said stator (S), and producing the displacement of said at least one rotor (R, 13, 14) to create said mechanical energy.

14. Conversion machine according to claim 13, **characterized in that** the said electromechanical converter (3) is an electric generator, the rotor (23) of said electric generator being coupled to said at least one rotor (R, 13, 14) of said magnetothermal converter (2) directly or by means of a speed reducer or multiplier (24) to adapt the speeds of said rotors (R, 13, 14; 23).

15. Use of a machine (1) for converting thermal energy into electrical energy according to any one of claims 13 and 14 for recovering thermal energy from waste heat lost in a temperature range of - 100°C to +100°C, and wherein the temperature difference between the first thermal source (S1) and the second thermal source (S2) is at least equal to 10°C.
